# EUROPÄISCHE PATENTSCHRIFT

(11) **EP 2 214 270 B1**
(45) Veröffentlichungstag und Bekanntmachung des Hinweises auf die Patenterteilung: **25.05.2011**
(21) Anmeldenummer: 10150483.5
(22) Anmeldetag: 12.01.2010
(51) Int. Cl.: H01R 33/94, H01R 33/945

(54) **Adapter für mindestens eine Kompaktleuchtstofflampe**
Adapter for at least one compact fluorescent lamp
Adaptateur doté d'au moins une lampe fluorescente compacte

(30) Priorität: 29.01.2009 DE 102009006549
(43) Veröffentlichungstag der Anmeldung: 04.08.2010
(73) Patentinhaber: OSRAM Gesellschaft mit beschränkter Haftung, 81543 München (DE)
(72) Erfinder: Beck, Martin, 86163 Augsburg (DE)

(56) Entgegenhaltungen:
- GB-A- 2 436 138
- US-A- 5 458 505
- US-A1- 2005 259 419
- US-B1- 6 350 046

## Beschreibung

### Technisches Gebiet

Die vorliegende Erfindung betrifft einen Adapter für mindestens eine Kompaktleuchtstofflampe.

### Stand der Technik

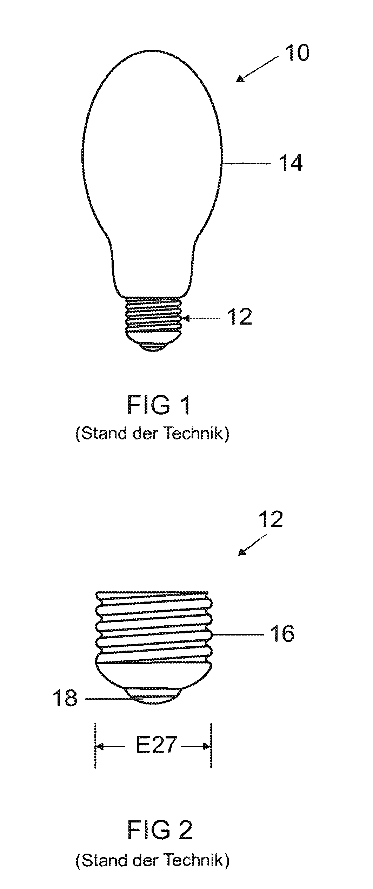

In der Straßen- und Wegebeleuchtung werden im Stand der Technik sehr häufig Quecksilberdampflampen, beispielsweise vom Typ Osram HQL, oder Mischlichtlampen, beispielsweise vom Typ Osram HWL, eingesetzt, die eine Schraubfassung, beispielsweise vom Typ E27 oder E40, aufweisen. Derartige Lampen werden zum Teil stehend, zum Teil hängend betrieben. Fig. 1 zeigt eine entsprechende Lampe 10 mit einer Fassung 12 und einem Glaskörper 14.

Fig. 2 zeigt beispielhaft in größerem Detail eine Fassung E 27. Diese weist ein Schraubgewinde 16 auf, das beim Einschrauben in eine entsprechende Lampenfassung mit einem ersten Potential verbunden wird, sowie einen Anschluss 18, der beim Einschrauben in eine entsprechende Fassung mit einem zweiten Potential verbunden wird. Durch den Stromfluss vom Anschluss 16 durch das Leuchtmittel zurück zum Anschluss 18 und umgekehrt wird die Lampe betrieben.

Derartige Lampen sind jedoch vergleichsweise ineffizient und zeichnen sich deshalb durch einen schlechten Wirkungsgrad aus.

Das Dokument US-A-5458505 offenbart einen Adapter für eine Lampe, der eine Kühleinrichtung beeinhältet.

### Darstellung der Erfindung

Insbesondere vor dem Hintergrund der anhaltenden Bemühungen zur Verminderung der weltweiten Treibhausgas-Emissionen liegt der vorliegenden Erfindung die Aufgabe zugrunde, eine Möglichkeit bereitzustellen, so dass Außenbeleuchtungen, insbesondere Straßen- und Wegebeleuchtungen mit höherer Effizienz betrieben werden können.

Diese Aufgabe wird gelöst durch einen Adapter mit den Merkmalen von Patentanspruch 1.

Der vorliegenden Erfindung liegen mehrere Erkenntnisse zugrunde: Grundsätzlich zeichnen sich Kompaktleuchtstofflampen durch eine deutlich höhere Effizienz aus als Quecksilberdampflampen oder Mischlichtlampen. Verwendet man jedoch bestehende Beleuchtungsanlagen, die für den Betrieb von Kompaktleuchtstofflampen ausgelegt sind, für die Straßen- und Wegebeleuchtung, wurde festgestellt, dass die Ergebnisse bisweilen unbefriedigend sind. Eine genauere Analyse hat ergeben, dass das Lichtstrom-Temperaturverhalten brennlagenabhängig ist. Durch eine weitere Analyse wurde festgestellt, dass ursächlich für das schlechte Lichtstrom-Temperaturverhalten in Außenanwendungen die falsche Brennlage ist. So kann der hängende Betrieb, d.h. ein Betrieb mit dem Schraubsockel oben, die Ursache sein. Dieser hängende Betrieb scheint für Umgebungstemperaturen, wie sie in der Außenbeleuchtung anzutreffen sind, d.h. im Jahresmittel werden Werte von 5°C angenommen, für gewisse Leuchtenformen ungeeignet zu sein. Es wurde festgestellt, dass sich für den Einsatz im Außenbereich im Hinblick auf die dort anzutreffenden Umgebungstemperaturen für die meisten Kompaktleuchtstofflampen ein geeignetes Lichtstrom-Temperaturverhalten ergibt, wenn die Kompaktleuchtstofflampe stehend betrieben wird.

Dies ist insbesondere bei Leuchten der Fall, die einen kleinen Wärmestau um die Lampe herum verursachen. Bei Betrieb heizt die Konvektionswärme der Lampe den Kolbenbogen mehr auf, die Lampe arbeitet dann effizienter.

Wenn nun eine Leuchte jedoch einen großen Wärmestau um die Lampe herum verursacht, so ist eine hängende Betriebsart die bessere. Dadurch bleibt der Kolbenbogen auf der richtigen Temperatur. Problematisch ist, wenn der Sockel der Leuchte für einen stehenden Betrieb konzipiert ist.

Generell ist also darauf zu achten, die Kompaktleuchtstofflampe in der Brennlage, also hängend oder stehend, zu betreiben, die unter den gegebenen Bedingungen optimal ist. Durch die Änderung der Orientierung verändert sich im Betrieb die Ausbildung und Temperierung des sogenannten Cold-Spots in der Kompaktleuchtstofflampe. Dieser beeinflusst wiederum direkt den erzeugbaren Lichtstrom.

Um einen jeweils optimalen Betrieb der Kompaktleuchtstofflampe zu gewährleisten, stellt die vorliegende Erfindung einen Adapter bereit, der nachträglich in Schraubfassungen eingedreht werden kann und einen Haltebügel aufweist, der eine jeweils optimale Betriebslage der Kompaktleuchtstofflampe über eine 180°-Drehung ermöglicht. Dadurch können Stehlaternen mit hängender E27-Fassung beispielsweise des Typs HQL mit einer Lichtleistung von ca. 40 lm/W oder vom Typ HWL mit beispielsweise 20 lm/W durch energiesparende Kompaktleuchtstofflampen mit einer Lichtleistung von mehr als 50 bis 75 lm/W bei unter den gegebenen Bedingungen optimaler stehender Betriebsorientierung ersetzt werden.

Durch die stehende Betriebsart kann damit eine hohe Effizienz auch bei niedrigen Umgebungstemperaturen und somit auch bei Anwendung im Außenbereich erreicht werden.

Überdies lassen sich durch den Adapter verschiedene Parameter von Kompaktleuchtstofflampen verändern: Durch die Änderung der Leuchtmittelorientierung lässt sich einerseits die Abstrahlcharakteristik und damit die Ausleuchtung der unter dem Adapter liegenden Fläche optimieren. Andererseits wird durch die Änderung der Leuchtmittelorientierung die Ausbildung und Temperierung des Cold-Spots geändert, was sich unmittelbar auf die ausgesandte Lichtmenge auswirkt. Außerdem lässt sich durch den Adapter auf einfache Weise eine zusätzliche Wärmestauvorrichtung anbringen, die bei hängender Montage der Kompaktleuchtstofflampe eine Optimierung der Thermik ermöglicht, ohne selbst Einfluss auf die Lichtabstrahlcharakteristik in die gewünschte Richtung zu nehmen.

Eine bevorzugte Ausführungsform zeichnet sich dadurch aus, dass der Adapter weiterhin eine Wärmestauvorrichtung, insbesondere eine schirmförmige Wärmestauvorrichtung, umfasst. Dadurch kann ohne Einfluss auf die Lichtabstrahlcharakteristik die Thermik von Kompaktleuchtstofflampen für einen Einsatz in der Außen- bzw. Straßenbeleuchtung optimiert werden. Zur Dimensionierung der Wärmestauanordnung wird bevorzugt davon ausgegangen, dass in Deutschland außen im Mittel eine Umgebungstemperatur von 5°C herrscht.

Bevorzugt ist die Wärmestauvorrichtung als kleiner, transparent gehaltener Schirm ausgebildet. Gemäß einer ersten Ausführungsform ist die Wärmestauvorrichtung mit der Lampenfassung gekoppelt. Dies stellt für einen Benutzer eine besonders einfache Montage bereit. Alternativ, insbesondere zur Reduktion der Herstellungskosten, kann die Wärmestauvorrichtung auch ausgelegt sein, mit der Lampenfassung, insbesondere durch Einsetzen der Kompaktleuchtstofflampe, gekoppelt zu werden. Die Fassung des Adapters kann für eine Kompaktleuchtstofflampe mit einem Schraubgewinde oder für eine Kompaktleuchtstofflampe mit einem Stiftsockel ausgelegt sein. Entsprechend kann vorgesehen sein, dass die Wärmestauvorrichtung im Falle einer Fassung für eine Kompaktleuchtstofflampe mit einem Schraubgewinde durch das Eindrehen der Lampe in den Adapter fixiert wird. Bei Kompaktleuchtstofflampen mit einem Stiftsockel ist die Wärmestauvorrichtung bevorzugt der Fassungsform angepasst. Die Fixierung der Wärmestauvorrichtung kann dabei durch das Einclipsen der Lampe in die Fassung erfolgen.

Bevorzugt umfasst ein erfindungsgemäßer Adapter weiterhin mindestens eine erste und eine zweite Verbindungsleitung, wobei die erste Verbindungsleitung zwischen den ersten Anschluss des Schraubgewindes und den ersten Anschluss der Koppelvorrichtung gekoppelt ist, und wobei die zweite Verbindungsleitung zwischen den zweiten Anschluss des Schraubgewindes und den zweiten Anschluss der Koppelvorrichtung gekoppelt ist. Dadurch wird auf einfache Weise eine Versorgung der Kompaktleuchtstofflampe über die ursprüngliche Schraubfassung sichergestellt. Ein eventuell in einer bestehenden Leuchte vorhandenes Vorschalt- oder Zündgerät muss entfernt werden.

Bevorzugt ist die erste und die zweite Verbindungsleitung im oder am Haltebügel geführt. Dadurch wird die Gefahr minimiert, dass die Verbindungsleitungen beschädigt werden. Überdies wird besonders bei einer Führung im Haltebügel sichergestellt, dass die Verbindungsleitungen nicht von den vorgesehenen Kontaktstellen abgerissen werden.

Insbesondere für den Fall, dass eine Kompaktleuchtstofflampe mit Stiftsockel in die Fassung des Adapters eingesetzt werden soll, umfasst der Adapter weiterhin ein elektronisches Vorschaltgerät, das zwischen den ersten und den zweiten Anschluss des Schraubgewindes und den mindestens einen ersten und den mindestens einen zweiten Anschluss der Koppelvorrichtung gekoppelt ist. Dies ermöglicht eine Vorheizung der Wendeln der Kompaktleuchtstofflampe.

Bevorzugt umfasst ein erfindungsgemäßer Adapter weiterhin eine Isolierung für die Kompaktleuchtstofflampe. Dadurch kann das Lichtstromoptimum auf 5°C Leuchtenaußentemperatur getrimmt werden. Bevorzugt wird die Isolierung durch Tauchung des Kolbenbogens der Kompaktleuchtstofflampe in transparentes Silikon appliziert.

Eine besonders bevorzugte Ausführungsform eines erfindungsgemäßen Adapters umfasst weiterhin eine Abstützvorrichtung, die ausgelegt ist, den Adapter gegen eine Leuchte abzustützen, in die der Adapter eingesetzt ist. Dadurch können die Folgen von Schwingungen, wie sie beispielsweise durch Schwerlastverkehr erzeugt werden, wirkungsvoll eliminiert werden.

Weitere vorteilhafte Ausführungsformen ergeben sich aus den Unteransprüchen.

### Kurze Beschreibung der Zeichnung(en)

Im Nachfolgenden werden nunmehr Ausführungsbeispiele eines erfindungsgemäßen Adapters unter Bezugnahme auf die beigefügten Zeichnungen näher beschrieben. Es zeigen:
- Fig. 1: eine aus dem Stand der Technik bekannte Lampe mit einer Schraubfassung;
- Fig. 2: in detaillierterer Darstellung die Fassung der Lampe von Fig. 1;
- Fig. 3: in schematischer Darstellung ein erstes Ausfüh- rungsbeispiel eines erfindungsgemäßen Adapters; und
- Fig. 4: in schematischer Darstellung ein zweites Ausfüh- rungsbeispiel eines erfindungsgemäßen Adapters.

### Bevorzugte Ausführung der Erfindung

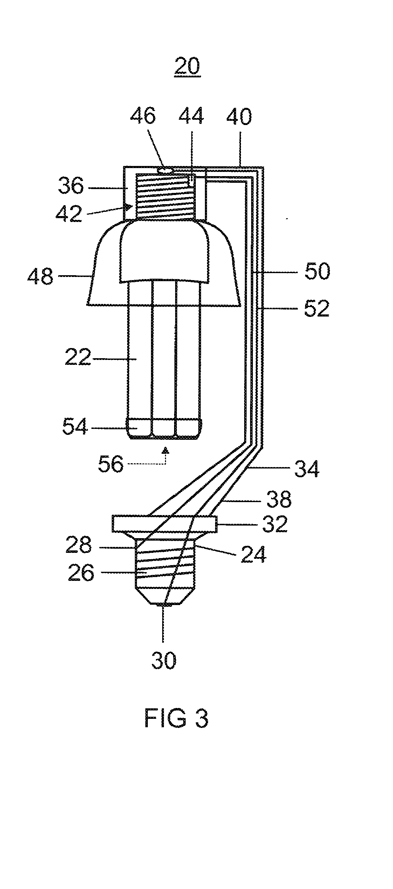

Fig. 3 zeigt in schematischer Darstellung ein erstes Ausführungsbeispiel eines erfindungsgemäßen Adapters 20, wobei zur Verdeutlichung eine Kompaktleuchtstofflampe 22 eingesetzt ist. Dieser Adapter 20 umfasst einen Schraubgewindesockel 24 zur Befestigung des Adapters 20 in einer Schraubfassung. Der Schraubgewindesockel 24 umfasst ein Schraubgewinde 26 mit einem ersten Anschluss 28 zum Anschließen an ein Bezugspotential und einem zweiten Anschluss 30 zum Anschließen an eine Versorgungsspannung. Er umfasst weiterhin eine Befestigungseinheit 32 für einen Haltebügel 34. Der Haltebügel 34 ist bevorzugt aus Verbundfaserwerkstoff, beispielsweise Kohlefaser, oder aus Kunststoff gefertigt. Dadurch lassen sich sehr stabile und leichte Lösungen erzielen. Es können einer oder mehrere Haltebügel vorgesehen sein.

Der Adapter weist weiterhin eine Fassung 36 für die Kompaktleuchtstofflampe 22 auf. Während das erste Ende 38 des Haltebügels 34 mit der Befestigungseinheit 32 des Schraubgewindesockels 24 gekoppelt ist, ist das zweite Ende 40 des Haltebügels 34 mit der Fassung 36 gekoppelt. Die Fassung 36 weist eine Koppelvorrichtung 42 in Form eines Innengewindes auf, wodurch eine Kopplung einer Kompaktleuchtstofflampe 22 mit einem Schraubgewinde ermöglicht wird. Die Koppelvorrichtung 42 weist einen ersten Anschluss 44 auf, der mit dem ersten Anschluss 28 des Schraubgewindes 26 gekoppelt ist, sowie einen zweiten Anschluss 46, der mit dem zweiten Anschluss 30 des Schraubgewindes 26 gekoppelt ist. Der Abstand zwischen der Fassung 36 und dem Schraubgewindesockel 24 ist so bemessen, dass ein Einsetzen der Kompaktleuchtstofflampe 22 in die Fassung 36 ermöglicht wird.

Der Adapter 20 umfasst weiterhin einen Schirm 48, der als Wärmestauvorrichtung dient. Der Schirm 48 ist bevorzugt transparent ausgebildet, beispielsweise aus einem transparenten Kunststoff oder aus einem transparenten Glas. Bei der Montage wird der nicht fest mit dem Adapter 20 verbundene Schirm 48 über den Schraubsockel der Kompaktleuchtstofflampe 22 gelegt und durch Eindrehen der Kompaktleuchtstofflampe 22 in die Fassung 36 am Adapter 20 fixiert.

Der Adapter 20 umfasst weiterhin eine erste Verbindungsleitung 50, die den ersten Anschluss 28 des Schraubgewindesockels 24 mit dem ersten Anschluss 44 der Fassung 36 elektrisch leitend verbindet. Eine zweite Verbindungsleitung 52 verbindet entsprechend den zweiten Anschluss 30 des Schraubgewindesockels 24 mit dem zweiten Anschluss 46 der Fassung 36.

Durch Tauchung in transparentes Silikon ist eine Isolierung 54 am Kolbenbogen 56 der Kompaktleuchtstofflampe 22 aufgebracht.

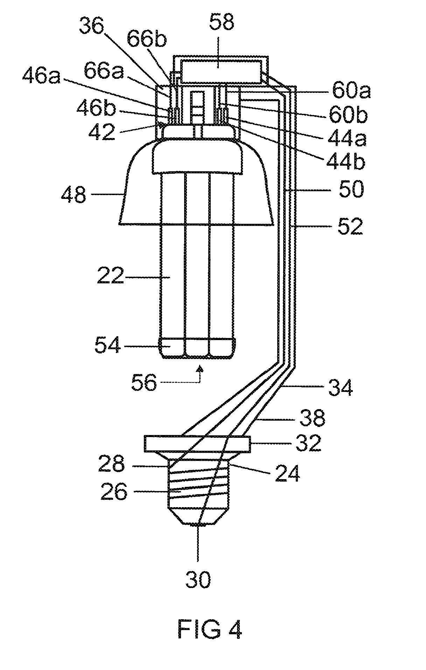

Soweit sie dieselben oder vergleichbare Bauelemente betreffen, werden die mit Bezug auf Fig. 3 eingeführten Bezugszeichen für die in Fig. 4 dargestellte zweite Ausführungsform eines erfindungsgemäßen Adapters übernommen. Anstelle eines Anschlusses 44 sind nunmehr zwei Anschlüsse 44a und 44b vorhanden, die zur Verdeutlichung nebeneinander eingezeichnet sind, obwohl sie tatsächlich hintereinander angeordnet sind. Entsprechendes gilt für den Anschluss 46, und die entsprechenden Zuleitungen 60 und 66.

Die in Fig. 4 dargestellte Ausführungsform eines erfindungsgemäßen Adapters 20 ist für den Betrieb einer Kompaktleuchtstofflampe 22 mit einem Stiftsockel ausgelegt. Sie umfasst weiterhin ein elektronisches Vorschaltgerät 58, das zwischen den ersten 28 und den zweiten Anschluss 30 des Schraubgewindes 26 und die ersten 44a, 44b und die zweiten Anschlüsse 46a, 46b der Koppelvorrichtung 42 gekoppelt ist. Über die Leitungen 60a, 60b und 66a, 66b kann eine Vorheizung der Wendeln der Kompaktleuchtstofflampe 22 realisiert werden.

Der Schirm 48 wird durch das Einclipsen der Kompaktleuchtstofflampe 22 in die Fassung 36 am Adapter 20 fixiert.

Bei beiden Ausführungsformen kann vorgesehen sein, dass der Schirm bereits mit dem Adapter, bevorzugt mit der Fassung 36 gekoppelt ist, so dass er nicht erst durch das Einsetzen einer Kompaktleuchtstofflampe 22 fixiert wird.

Durch eine nicht dargestellte Abstützvorrichtung kann der Adapter 20 zur Vermeidung von Schwingungen gegen eine Leuchte abgestützt werden, in die der Adapter 20 eingesetzt ist.

## Patentansprüche

1. Adapter (20) für mindestens eine Kompaktleuchtstofflampe (22), wobei der Adapter (20) umfasst:
- einen Schraubgewindesockel (24) zur Befestigung des Adapters (20) in einer Schraubfassung, wobei der Schraubgewindesockel (24) ein Schraubgewinde (26) aufweist mit einem ersten Anschluss (28) zum Anschließen an ein Bezugspotential und einen zweiten Anschluss (30) zum Anschließen an eine Versorgungsspannung sowie eine Befestigungseinheit (32);
- mindestens einen Haltebügel (34) mit einem ersten (38) und einem zweiten Abschnitt (40), wobei der erste Abschnitt (38) mit der Befestigungseinheit (32) des Schraubgewindesockels (24) gekoppelt ist; und
- mindestens eine Fassung (36) für die Kompaktleuchtstofflampe (22), die mit dem zweiten Abschnitt (40) des Haltebügels (34) gekoppelt ist, wobei die Fassung (36) eine Koppelvorrichtung (42) zum Koppeln mit der Kompaktleuchtstofflampe (22) aufweist, wobei die Koppelvorrichtung (42) eine Kopplungsseite aufweist, die in die Richtung zum Schraubgewindesockel (24) gerichtet ist, wobei die Koppelvorrichtung (42) mindestens einen ersten Anschluss (44) aufweist, der mit dem ersten Anschluss (28) des Schraubgewindes, und mindestens einen zweiten Anschluss (46), der mit dem zweiten Anschluss (30) des Schraubgewindes (26) gekoppelt ist, wobei der Abstand zwischen der Fassung (36) und dem Schraubgewindesockel (24) so bemessen ist, dass ein Einsetzen der Kompaktleuchtstofflampe (22) in die Fassung (36) ermöglicht ist.

2. Adapter (20) nach Anspruch 1,
**dadurch gekennzeichnet,**
**dass** er weiterhin eine Wärmestauvorrichtung (48), insbesondere eine schirmförmige Wärmestauvorrichtung (48), umfasst.

3. Adapter (20) nach Anspruch 2,
**dadurch gekennzeichnet,**
**dass** die Wärmestauvorrichtung (48) mit der Lampenfassung (36) gekoppelt ist.

4. Adapter (20) nach Anspruch 2,
**dadurch gekennzeichnet,**
**dass** die Wärmestauvorrichtung (48) ausgelegt ist, mit der Lampenfassung (36), insbesondere durch Einsetzen der Kompaktleuchtstofflampe (22), gekoppelt zu werden.

5. Adapter (20) nach einem der vorhergehenden Ansprüche,
**dadurch gekennzeichnet,**
**dass** die Fassung (36) für eine Kompaktleuchtstofflampe (22) mit einem Schraubgewinde (26) ausgelegt ist.

6. Adapter (20) nach einem der Ansprüche 1 bis 4,
**dadurch gekennzeichnet,**
**dass** die Fassung (36) für eine Kompaktleuchtstofflampe (22) mit einem Stiftsockel ausgelegt ist.

7. Adapter (20) nach einem der vorhergehenden Ansprüche,
**dadurch gekennzeichnet,**
**dass** er weiterhin mindestens eine erste (50) und eine zweite Verbindungsleitung (52) umfasst, wobei die erste Verbindungsleitung (50) zwischen den ersten Anschluss (28) des Schraubgewindes (26) und den mindestens einen ersten Anschluss (44) der Koppelvorrichtung (42) gekoppelt ist und wobei die zweite Verbindungsleitung (52) zwischen den mindestens einen zweiten Anschluss (30) des Schraubgewindes (26) und den zweiten Anschluss (46) der Koppelvorrichtung (42) gekoppelt ist.

8. Adapter (20) nach Anspruch 7,
**dadurch gekennzeichnet,**
**dass** die erste (50) und die zweite Verbindungsleitung (52) im oder am Haltebügel (34) geführt sind.

9. Adapter (20) nach einem der vorhergehenden Ansprüche,
**dadurch gekennzeichnet,**
**dass** er weiterhin ein elektronisches Vorschaltgerät (58) umfasst, das zwischen den ersten (28) und den zweiten Anschluss (30) des Schraubgewindes (26) und den mindestens einen ersten (44) und den mindestens einen zweiten Anschluss (46) der Koppelvorrichtung (42) gekoppelt ist.

10. Adapter (20) nach einem der vorhergehenden Ansprüche,
**dadurch gekennzeichnet,**
**dass** er weiterhin eine Isolierung (54) für die Kompaktleuchtstofflampe (22) umfasst.

11. Adapter (20) nach Anspruch 10,
**dadurch gekennzeichnet,**
**dass** die Isolierung (54) auf den Kolbenbogen (56) der Kompaktleuchtstofflampe (22) aufbringbar ist.

12. Adapter (20) nach einem der Ansprüche 10 oder 11,
**dadurch gekennzeichnet,**
**dass** die Isolierung (54) Silikon, insbesondere transparentes Silikon, umfasst.

13. Adapter (20) nach einem der vorhergehenden Ansprüche,
**dadurch gekennzeichnet,**
**dass** er weiterhin eine Abstützvorrichtung umfasst, die ausgelegt ist, den Adapter (20) gegen eine Leuchte abzustützen, in die der Adapter (20) eingesetzt ist.

## Claims

1. Adapter (20) for at least one compact fluorescent lamp (22), wherein the adapter (20) comprises:
- an Edison-type screw thread socket (24) for securing the adapter (20) in a screwed socket, wherein the screw thread socket (24) has a screw thread (26) having a first terminal (28) for connecting to a reference potential and a second terminal (30) for connecting to a supply voltage, as well as a fixing unit (32);
- at least one retaining bracket (34) having a first (38) and a second section (40), wherein the first section (38) is coupled to the fixing unit (32) of the screw thread socket (24);
and
- at least one lamp holder (36) for the compact fluorescent lamp (22), which lamp holder (36) is coupled to the second section (40) of the retaining bracket (34), wherein the lamp holder (36) has a coupling device (42) for coupling to the compact fluorescent lamp (22), wherein the coupling device (42) has a coupling side which is aligned in the direction of the screw thread socket (24), wherein the coupling device (42) has at least one terminal (44) which is coupled to the first terminal (28) of the screw thread, and at least one second terminal (46) which is coupled to the second terminal (30) of the screw thread (26), wherein the clearance between the lamp holder (36) and the screw thread socket (24) is dimensioned such that the compact fluorescent lamp (22) is able to be inserted into the lamp holder (36).

2. Adapter (20) according to claim 1,
**characterised in that**
it further comprises a heat accumulation device (48), in particular an umbrella-shaped heat accumulation device (48).

3. Adapter (20) according to claim 2,
**characterised in that**
the heat accumulation device (48) is coupled to the lamp holder (36).

4. Adapter (20) according to claim 2,
**characterised in that**
the heat accumulation device (48) is designed to be coupled to the lamp holder (36), in particular by insertion of the compact fluorescent lamp (22).

5. Adapter (20) according to one of the preceding claims,
**characterised in that**
the lamp holder (36) is designed for a compact fluorescent lamp (22) having a screw thread (26).

6. Adapter (20) according to one of claims 1 to 4,
**characterised in that**
the lamp holder (36) is designed for a compact fluorescent lamp (22) having a pin cap.

7. Adapter (20) according to one of the preceding claims,
**characterised in that**
it further comprises at least one first (50) and one second connecting lead (52), wherein the first connecting lead (50) is coupled between the first terminal (28) of the screw thread (26) and the at least one first terminal (44) of the coupling device (42) and wherein the second connecting lead (52) is coupled between the at least one second terminal (30) of the screw thread (26) and the second terminal (46) of the coupling device (42).

8. Adapter (20) according to claim 7,
**characterised in that**
the first (50) and the second connecting lead (52) are routed in or on the retaining bracket (34).

9. Adapter (20) according to one of the preceding claims,
**characterised in that**
it further comprises an electronic ballast (58) which is coupled between the first (28) and the second terminal (30) of the screw thread (26) and the at least one first (44) and the at least one second terminal (46) of the coupling device (42).

10. Adapter (20) according to one of the preceding claims,
**characterised in that**
it further comprises an insulation means (54) for the compact fluorescent lamp (22).

11. Adapter (20) according to claim 10,
**characterised in that**
the insulation means (54) can be applied to the bulb envelope (56) of the compact fluorescent lamp (22).

12. Adapter (20) according to one of claims 10 or 11,
**characterised in that**
the insulation means (54) comprises silicone, in particular transparent silicone.

13. Adapter (20) according to one of the preceding claims,
**characterised in that**
it further comprises a supporting device which is designed to brace the adapter (20) against a lighting fixture into which the adapter (20) is inserted.

## Revendications

1. Adaptateur (20) pour au moins une lampe fluorescente compacte (22), l'adaptateur (20) comprenant :
- un culot fileté (24) pour la fixation de l'adaptateur (20) dans une douille à vis, le culot fileté (24) présentant un filetage (26) avec une première connexion (28) pour le raccordement à un potentiel de référence et une seconde connexion (30) pour le raccordement à une tension d'alimentation, ainsi qu'une unité de fixation (32) ;
- au moins une bride de support (34) comprenant une première (38) et une seconde (40) portions, la première portion (38) étant couplée à l'unité de fixation (32) du culot fileté (24) ; et
- au moins une douille (36) pour la lampe fluorescente compacte (22) qui est couplée à la seconde portion (40) de la bride de support (34), la douille (36) étant pourvue d'un dispositif d'accouplement (42) pour l'accouplement avec la lampe fluorescente compacte (22), le dispositif d'accouplement (42) ayant un côté d'accouplement qui regarde en direction du culot fileté (24), le dispositif d'accouplement (42) étant pourvu d'au moins une première connexion (44) qui est couplée à la première connexion (28) du filetage et d'au moins une seconde connexion (46) qui est couplée à la seconde connexion (30) du filetage (26), la distance entre la douille (36) et le culot fileté (24) étant dimensionnée de manière à permettre une insertion de la lampe fluorescente compacte (22) dans la douille (36).

2. Adaptateur (20) selon la revendication 1, **caractérisé en ce qu'**il comprend, en outre, un dispositif d'accumulation de chaleur (48), notamment un dispositif d'accumulation de chaleur (48) en forme d'abat-jour.

3. Adaptateur (20) selon la revendication 2, **caractérisé en ce que** le dispositif d'accumulation de chaleur (48) est couplé à la douille de lampe (36).

4. Adaptateur (20) selon la revendication 2, **caractérisé en ce que** le dispositif d'accumulation de chaleur (48) est conçu pour être couplé avec la douille de lampe (36), notamment par insertion de la lampe fluorescente compacte (22).

5. Adaptateur (20) selon l'une des revendications précédentes, **caractérisé en ce que** la douille (36) est conçue pour une lampe fluorescente compacte (22) pourvue d'un filetage (26).

6. Adaptateur (20) selon l'une des revendications 1 à 4, **caractérisé en ce que** la douille (36) est conçue pour une lampe fluorescente compacte (22) pourvue d'un culot à broches.

7. Adaptateur (20) selon l'une des revendications précédentes, **caractérisé en ce qu'**il comprend, en outre, une première (50) et une seconde (52) lignes de connexion, la première ligne de connexion (50) étant couplée entre la première connexion (28) du filetage (26) et l'au moins une première connexion (44) du dispositif d'accouplement (42) et la seconde ligne de connexion (52) étant couplée entre l'au moins une seconde connexion (30) du filetage (26) et la seconde connexion (46) du dispositif d'accouplement (42).

8. Adaptateur (20) selon la revendication 7, **caractérisé en ce que** la première (50) et la seconde (52) lignes de connexion passent dans ou sur la bride de support (34).

9. Adaptateur (20) selon l'une des revendications précédentes, **caractérisé en ce qu'**il comprend, en outre, un dispositif électronique en amont (58) qui est branché entre la première (28) et la seconde (30) connexions du filetage (26) et l'au moins une première (44) et l'au moins une seconde (46) connexions du dispositif d'accouplement (42).

10. Adaptateur (20) selon l'une des revendications précédentes, **caractérisé en ce qu'**il comprend, en outre, une isolation (54) pour la lampe fluorescente compacte (22).

11. Adaptateur (20) selon la revendication 10, **caractérisé en ce que** l'isolation (54) peut être placée sur l'arrondi de l'ampoule (56) de la lampe fluorescente compacte (22).

12. Adaptateur (20) selon l'une des revendications 10 ou 11, **caractérisé en ce que** l'isolation (54) comprend de la silicone, notamment de la silicone transparente.

13. Adaptateur (20) selon l'une des revendications précédentes, **caractérisé en ce qu'**il comprend, en outre, un dispositif d'appui qui est conçu pour servir d'appui à l'adaptateur (20) contre un lampadaire dans lequel l'adaptateur (20) est inséré.
